# EUROPEAN PATENT SPECIFICATION

(11) **EP 4 485 623 B1**
(45) Date of publication and mention of the grant of the patent: **23.09.2026**
(21) Application number: 24177944.6
(22) Date of filing: 24.05.2024
(51) Int. Cl.: H01M 10/615, H01M 10/617, H01M 10/625, H01M 10/653, H01M 10/6571, H01M 50/213, H01M 50/249

(54) **BATTERY ASSEMBLY, BATTERY MODULE, AND ELECTRICITY-CONSUMPTION APPARATUS**
BATTERIEANORDNUNG, BATTERIEMODUL UND ELEKTRIZITÄTSVERBRAUCHSVORRICHTUNG
ENSEMBLE BATTERIE, MODULE DE BATTERIE ET APPAREIL DE CONSOMMATION D'ÉLECTRICITÉ

(30) Priority: 05.06.2023 CN 202310652692
(43) Date of publication of application: 01.01.2025
(73) Proprietor: Hithium Tech HK Limited, Hong Kong (HK)
(72) Inventor: MA, Yaqiang, Shenzhen City 518110 (CN)
(74) Representative: Santarelli

(56) References cited:
- CN-A- 105 449 313
- CN-A- 107 170 925
- CN-A- 109 428 137
- CN-A- 110 828 942
- CN-A- 113 764 781

## Description

### TECHNICAL FIELD

The disclosure relates to the field of battery technologies, and in particular, to a battery assembly, a battery module, and an electricity-consumption apparatus.

### BACKGROUND

With people's increasing requirements on energy density of a battery system, it is necessary to mount more battery cells into an irregular battery module. A cylindrical battery cell can better adapt to the irregular battery module and improve the energy density of the battery module, and therefore, the cylindrical battery cell is widely used.

The battery module needs to operate at a relatively appropriate temperature. An optimal operating temperature range of the battery module is 25°C to 30°C. An excessively high or low temperature will affect operating efficiency of the battery module. When the battery cell in the battery module is in a low temperature environment, the battery cell needs to be heated, so that the battery cell can be charged and discharged efficiently. However, how to uniformly heat the battery cell in the battery module is a current technical problem to be solved.

CN 113 764 781 A, which discloses a battery assembly according to the preamble of claim 1, relates to a battery pack heating system including a battery pack heating film, a temperature sensor, and a battery management system. The battery pack heating film includes a biaxially stretched polypropylene film, an insulating waterproof film layer, a heating film layer, and electrodes. The heating film layer is wrapped inside and outside by the biaxially stretched polypropylene film, with the insulating waterproof film layer positioned between the heating film layer and the biaxially stretched polypropylene film. The biaxially stretched polypropylene film is wrapped around the exterior of the battery, and electrodes are installed inside the heating film layer to heat the heating film layer. The temperature sensor detects the temperature of the battery, and the battery management system controls the electrode to heat the heating film layer based on the value detected by the temperature sensor.

CN 105 449 313 A relates to a heating assembly including a heating film, which is covered on the power battery. The heating film includes a heating unit and insulating films arranged on both the inner and outer sides of the heating unit.

CN 110 828 942 A relates to a flat heating film for a lithium-ion power battery including an insulating separation film containing an accommodation space, and a heating element consisting of a heating body and a pair of heating tabs. The heating body is disposed within the accommodation space, and the heating tabs extend out of the accommodation space. The interior of the heating body has a gap, and an insulating filling layer is disposed within this gap in the heating body.

CN 109 428 137 A relates to a secondary battery including a casing, at least one cell housed within the casing, with each cell having a positive electrode and a negative electrode. A top cover assembly is mounted on the casing and includes a top cover plate, a positive electrode terminal disposed on the top cover plate and electrically connected to the positive electrode of each cell, and a negative electrode terminal disposed on the top cover plate and electrically connected to the negative electrode of each cell. A conductive heating sheet is disposed within the casing and connected to the negative electrode terminal of the top cover assembly. The secondary battery also includes a conductive connection sheet, which is connected to the positive electrode terminal of the top cover assembly and in controlled electrical contact with the conductive heating sheet.

CN 107 170 925 A relates to a battery cell including a casing, electrodes including a positive electrode and a negative electrode disposed on the casing, a cell disposed within the casing, and an electric heating device. The electric heating device is positioned inside the casing and is used to heat the cell.

### SUMMARY

The invention is set out in the appended set of claims.

### BRIEF DESCRIPTION OF THE DRAWINGS

To describe technical solutions in the embodiments of the disclosure more clearly, the following briefly introduces the accompanying drawings required for describing the embodiments. Apparently, the accompanying drawings in the following description merely illustrate some embodiments of the disclosure.
FIG. 1 is a schematic structural view of a battery assembly according to an embodiment of the disclosure.
FIG. 2 is a schematic view of a heating film in an unwound state according to an embodiment of the disclosure.
FIG. 3 is a cross-sectional view of the heating film in FIG. 2 according to an embodiment of the disclosure, taken alone line A-A.
FIG. 4 is a schematic structural view of a battery assembly according to another embodiment of the disclosure.
FIG. 5 is a schematic structural view of a battery assembly according to another embodiment of the disclosure.
FIG. 6 is a schematic view of a heating film in an unwound state according to an embodiment of the disclosure.
FIG. 7 is a schematic structural view of a battery module according to an embodiment of the disclosure.
FIG. 8 is a schematic exploded structural view of a battery module according to an embodiment of the disclosure.
FIG. 9 is an enlarged view of FIG. 8 at a dashed circle C of the disclosure.
FIG. 10 is a schematic structural view of a battery module according to another embodiment of the disclosure.
FIG. 11 is a schematic exploded structural view of a battery module according to another embodiment of the disclosure.
FIG. 12 is an enlarged view of FIG. 11 at a dashed circle D of the disclosure.
FIG. 13 is a top view of a battery module according to an embodiment of the disclosure.
FIG. 14 is a cross-sectional view of the battery module in FIG. 13 according to an embodiment of the disclosure, taken alone line E-E.
FIG. 15 is an enlarged view of FIG. 14 at a dashed circle F of the disclosure.
FIG. 16 is an enlarged view of FIG. 14 at a dashed circle G of the disclosure.
FIG. 17 is a circuit block diagram of an electricity-consumption apparatus according to an embodiment of the disclosure.
FIG. 18 is a schematic structural view of an electricity-consumption apparatus according to an embodiment of the disclosure.

Reference numbers are described as follows:
100 - battery assembly, 110 - battery cell, 111 - peripheral side face, 120 - heating film, 121 - first insulating layer, 122 - heating layer, 1221 - heating portion, 1221a - first heating group, 1221b - second heating group, 1222 - heating sub-portion, 1223 - first lead portion, 1224 - second lead portion, 1225 - first lead sub-portion, 1226 - second lead sub-portion, 1227 - third lead sub-portion, 1228 - fourth lead sub-portion, 1229 - bending sub-portion, 123 - second insulating layer, 124 - gap, 130 - first end face, 140 - second end face, 200 - battery module, 210 - mounting assembly, 211 - first mounting member, 2111 - first groove, 212 - second mounting member, 2121 - second groove, 213 - first electrical connector, 2131 - first electrical connection portion, 2132 - first abutting portion, 214 - second electrical connector, 2141 - second electrical connection portion, 2142 - second abutting portion, 300 - electricity-consumption apparatus, 310 - apparatus body.

### DETAILED DESCRIPTION

Technical solutions in embodiments of the disclosure will be described clearly and completely hereinafter with reference to the accompanying drawings described. Apparently, the described embodiments are merely some rather than all embodiments of the disclosure.

The terms such as "first" and "second" used in the specification, the claims, and the accompany drawings of the disclosure are used for distinguishing between different objects rather than describing a particular order. In addition, the terms "include", "comprise", and "have" as well as variations thereof are intended to cover non-exclusive inclusion. For example, a process, system, product, or apparatus including a series of steps or units is not limited to the listed steps or units, it can optionally include other operations or units that are not listed; alternatively, other operations or units inherent to the process, product, or device can be included either.

The term "embodiment" referred to herein means that a particular feature, structure, or feature described in connection with the embodiment may be contained in at least one embodiment of the disclosure. The phrase appearing in various places in the specification does not necessarily refer to the same embodiment, nor does it refer an independent or alternative embodiment that is mutually exclusive with other embodiments. It is expressly and implicitly understood by those skilled in the art that an embodiment described herein may be combined with other embodiments.

An optimal operating temperature range of a battery is 25°C to 30°C. The battery needs to operate at an appropriate temperature. Excessively high or excessively low temperatures will affect operating efficiency of the battery. When in a low temperature, the battery needs to be heated to maintain a temperature of the battery within a reasonable range. A cylindrical battery cell module typically utilizes a serpentine plate heating film. A serpentine support plate is provided between each two layers of cylindrical battery cells, the heating film is fixed to the support plate, and heat-conducting pads are fixed on both sides of the support plate. The heating film can be heated by a current, and the heat-conducting pads are configured to transfer heat to the cylindrical battery cell. However, the heating film can only heat some regions of the cylindrical battery cell through the support plate and the heat-conducting pads, resulting in non-uniform heating of the cylindrical battery cell and different temperatures across various regions of the cylindrical battery cell. This leads to variations in charging and discharging capabilities of different parts of the cylindrical battery cell, causing some regions of the cylindrical battery cell to overcharge or overdischarge, thereby affecting the cycle life of the cylindrical battery cell and reducing the safety performance of the cylindrical battery cell. In addition, a contact area between the heating film and the cylindrical battery cell through the support plate and the heat-conducting pads is relatively small, resulting in relatively low heating efficiency. Moreover, when the cylindrical battery cell expands due to heating, the heating film will be stretched by the cylindrical battery cell; and when the cylindrical battery cell restores to its original shape, some regions of the heating film do not change with a change of a size of the cylindrical battery cell, causing the heating film to detach from the cylindrical battery cell. Some regions of the heating film not in contact with the cylindrical battery cell are prone to overheat, thereby reducing the safety performance of the cylindrical battery cell.

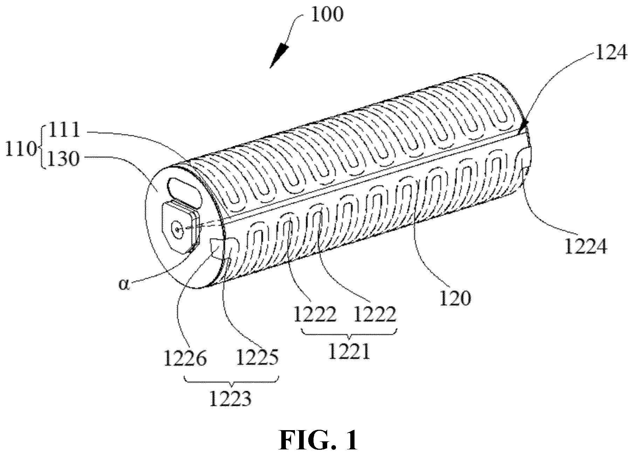

Referring to FIGS. 1-3, a battery assembly 100 is provided in the disclosure. The battery assembly 100 includes a battery cell 110 and a heating film 120. The battery cell 110 is configured to provide energy and has a peripheral side face 111. The heating film 120 is attached to the peripheral side face 111 of the battery cell 110 for heating the battery cell 110. The heating film 120 includes a first insulating layer 121, a heating layer 122, and a second insulating layer 123 that are sequentially stacked. The first insulating layer 121 is closer to the peripheral side face of the battery cell 110 than the second insulating layer 123. The heating layer 122 is configured to receive a current to generate heat energy to heat the battery cell 110.

The heating film 120 is attached to the peripheral side face 111 of the battery cell 110. The heating film 120 covers most regions of the battery cell 110. A contact area between the heating film 120 and the peripheral side face 111 of the battery cell 110 is relatively large. The heating film 120 can transfer heat to the battery cell 110, thereby heating the battery cell 110.

Optionally, the heating layer 122 is configured to receive a current, and generate heat when the current flows through the heating layer 122.

Optionally, the heating layer 122 is formed by a metal wire(s). When a current is applied to the heating layer 122, the current may flow through the metal wire(s) to generate heat, thereby heating the battery cell 110. The metal wire may be, but is not limited to, a copper wire, a nickel wire, an iron wire, a chromium wire, or the like.

It may be understood that, the battery cell 110 may be cylindrical. The peripheral side face of the battery cell 110 may be annular.

In the embodiments of the disclosure, the heating film 120 is arranged around the peripheral side face 111 of the battery cell 110. When a temperature of the battery cell 110 is relatively low, the heating film 120 may heat the battery cell 110. The heating film 120 covers the peripheral side face 111 of the battery cell 110, so that most regions of the battery cell 110 can be covered. The battery cell 110 can be heated uniformly, all the regions of the battery cell 110 have the same temperature and thus the same charging and discharging capability, thereby improving the safety performance of the battery assembly 100, and prolonging the cycle life of the battery assembly 100. In addition, the contact area between the heating film 120 and the battery cell 110 is relatively large, the heating film 120 can directly heat the battery cell 110, and the heating film 120 has a relatively high heating efficiency, thereby improving the heating efficiency of the battery assembly 100. Moreover, the first insulating layer 121, the heating layer 122, and the second insulating layer 123 are stacked on the peripheral side face 111 of the battery cell 110 in sequence. The first insulating layer 121 and the second insulating layer 123 are configured to secure the position of the heating layer 122, preventing the heating layer 122 from shifting and causing a short circuit. When a current is applied to the heating layer 122, the heating layer 122 may generate heat energy to heat the battery cell 110. The heating layer 122 is attached to the battery cell 110 through the first insulating layer 121, so that heat energy generated by the heating layer 122 can be transferred to the battery cell 110 to heat the battery cell 110. The contact area between the first insulating layer 121 and the battery cell 110 is relatively large, so that the heating film 120 has a high heating efficiency. Further, the battery cell 110 can be heated uniformly, ensuring all the regions of the battery cell 110 have the same temperature and thus the same charging and discharging capability, thereby improving the safety performance of the battery assembly 100. Finally, the peripheral side face of the battery cell 110 is annular. The heating film 120 is attached to the peripheral side face of the battery cell 110. If the battery cell 110 expands due to heating and presses against the heating film 120, a pressing force exerted on the heating film 120 can be released along the annular peripheral side face, thereby avoiding the heating film 120 from being broken due to an excessive pressing force on the heating film 120 at corners, and prolonging the service life of the heating film 120. Thus, the heating film 120 is not prone to detach from the cylindrical battery cell 110, thereby avoiding overheating of the heating film 120 and improving the safety performance of the battery assembly 100.

In some embodiments, the heating film 120 is adhered to the peripheral side face 111 of the battery cell 110. The heating film 120 is adhered to the peripheral side face 111 of the battery cell 110 through at least one of a back adhesive, a thermal conductive adhesive, and the like.

In the embodiments of the disclosure, the heating film 120 is adhered to the peripheral side face 111 of the battery cell 110 through a back adhesive, a thermal conductive adhesive, or the like, thereby enhancing the connection between the heating film 120 and the battery cell 110. It is beneficial to further preventing the heating film 120 from detaching from the peripheral side face 111 of the battery cell 110, so that the heating film 120 can heat the battery cell 110. In a case where the heating film 120 is adhered to the peripheral side face 111 of the battery cell 110 through a back adhesive, the back adhesive helps strengthen the adhesion between the heating film 120 and the battery cell 110, reduces a distance between the heating film 120 and the battery cell 110, and helps reduce the size of the battery assembly 100. In a case where the heating film 120 is adhered to the peripheral side face 111 of the battery cell 110 through a thermal conductive adhesive, the thermal conductive adhesive facilitates an increase in a speed of transferring heat from the heating film 120 to the battery cell 110, and an improvement in efficiency of the heating film 120 in heating the battery cell 110.

Alternatively, in some embodiments, a material of the first insulating layer 121 may be, but not limited to, at least one of polyimide, polyethylene terephthalate, epoxy resin, silica gel, and the like.

In the embodiments of the disclosure, in a case where the material of the first insulating layer 121 is polyimide or polyethylene terephthalate, the first insulating layer 121 is relatively soft. The heating film 120 may be formed by bending around the peripheral side face 111 of the battery cell 110, and may be adhered to the peripheral side face 111 of the battery cell 110 through a back adhesive, thereby simplifying an assembly of the battery assembly 100 and helping to reduce the assembly costs of the battery assembly 100. In a case where the first insulating layer 121 is made of epoxy resin or silica gel, the first insulating layer 121 is relatively hard, the heating film 120 is directly formed first, and then is sleeved on the peripheral side face 111 of the battery cell 110. A thermal conductive adhesive is disposed between the heating film 120 and the battery cell 110 to adhere the heating film 120 to the peripheral side face 111 of the battery cell 110, improving the structural strength of the heating film 120.

Alternatively, in some embodiments, the material of the second insulating layer 123 may be, but not limited to, at least one of polyimide, polyethylene terephthalate, epoxy resin, silica gel, and the like.

In the embodiments of the disclosure, in a case where the material of the second insulating layer 123 is polyimide or polyethylene terephthalate, the second insulating layer 123 is relatively soft. The heating film 120 may be formed by bending around the peripheral side face 111 of the battery cell 110, and may be adhered to the peripheral side face 111 of the battery cell 110 through a back adhesive, thereby simplifying an assembly of the battery assembly 100 and helping to reduce the assembly costs of the battery assembly 100. In a case where the second insulating layer 123 is made of epoxy resin or silica gel, the second insulating layer 123 is relatively hard, the heating film 120 is directly formed first, and then is sleeved on the peripheral side face 111 of the battery cell 110. A thermal conductive adhesive is disposed between the heating film 120 and the battery cell 110 to adhere the heating film 120 to the peripheral side face 111 of the battery cell 110, improving the structural strength of the heating film 120.

Alternatively, in some embodiments, the first insulating layer 121 and the second insulating layer 123 are made of the same material. In a case where the first insulating layer 121 and the second insulating layer 123 are made of the same material, the bonding strength between the first insulating layer 121 and the second insulating layer 123 can be improved, thereby improving the ability to secure the heating layer 122.

Alternatively, in some embodiments, the heating layer 122 may be formed on a surface of the first insulating layer 121 facing the second insulating layer 123 through at least one of etching, stamping and blanking, winding, etc. The heating layer 122 may be formed as follows. A metal layer is electroplated on the surface of the first insulating layer 121 facing the second insulating layer 123. The heating layer 122 is then formed on the surface of the first insulating layer 121 facing the second insulating layer 123 through photolithographic etching, thereby helping to improve the processing efficiency of the heating layer 122. In addition, the heating layer 122 may also be disposed on the surface of the first insulating layer 121 facing the second insulating layer 123 through stamping and blanking, which helps to improve structural strength of the heating layer, so that the heating film 120 can stably heat the battery cell 110. Furthermore, the heating layer 122 may be formed by winding a metal wire on the surface of the first insulating layer 121 facing the second insulating layer 123 in a snake-like or curved configuration, and the heating layer 122 is fixed by the first insulating layer 121 and the second insulating layer 123. The heating layer 122 may be formed in a winding manner that is simple and easy to operate, thereby facilitating simplification of a processing technology.

In some embodiments, the heating layer 122 includes a heating portion 1221. The heating portion 1221 includes multiple heating sub-portions 1222. Each of the heating sub-portions 1222 extends in a circumferential direction of the battery cell 110. The multiple heating sub-portions 1222 are arranged at intervals in a height direction of the battery cell 110 and sequentially connected end to end.

It may be understood that, the circumferential direction of the battery cell 110 refers to a direction along the circumference of the battery cell 110.

It may be understood that, an extending direction of the heating sub-portion 1222 intersects the height direction of the battery cell 110. A plane where the heating sub-portion 1222 is located is coaxial with the peripheral side face 111.

It may be understood that the multiple heating sub-portions 1222 may be arranged at intervals in the height direction of the battery cell 110 and sequentially connected end to end as follows. The multiple heating sub-portions 1222 are sequentially connected in a bending manner, and are arranged at intervals in the height direction of the battery cell 110.

In the disclosure, the term "a plurality of" or "multiple" means "two or more".

It may be understood that, the heating portion 1221 may receive a current. When the current flows through the heating portion 1221, the heating portion 1221 generates heat energy.

Optionally, a material of the heating portion 1221 may be at least one of copper, nickel, iron, chromium, and the like. The material of the heating portion 1221 is conductive. When a current flows through the heating portion 1221, the heating portion 1221 will generate and dissipate heat energy.

Alternatively, in some embodiments, the extending direction of the heating sub-portion 1222 is perpendicular to the height direction of the battery cell 110.

In the embodiments of the disclosure, each of the heating sub-portions 1222 extends in the circumferential direction of the battery cell 110. The multiple heating sub-portions 1222 are arranged at intervals in the height direction of the battery cell 110 and sequentially connected end to end. Thus, when a current is applied to the heating layer 122, the current will flow through the multiple heating sub-portions 1222, and the multiple heating sub-portions 1222 can generate heat energy to heat the battery cell 110. The multiple heating sub-portions 1222 extend along the peripheral side face 111 of the battery cell 110 and are attached to the peripheral side face 111, so that most regions of the battery cell 110 can be covered, the battery cell 110 can be heated uniformly, and all the regions of the battery cell 110 have the same temperature, avoiding overcharging or overdischarging of the battery cell 110 due to temperature differences across various regions of the battery cell 110, and improving the safety performance of the battery assembly 100. In addition, the multiple heating sub-portions 1222 are connected to the peripheral side face 111 of the battery cell 110 through the first insulating layer 121, thus the contact area between the heating film 120 and the battery cell 110 is relatively large, so that the heating film 120 has high heating efficiency.

According to the invention, the heating film 120 is formed by bending a rectangular heating film 120 and attaching the rectangular heating film 120 to the peripheral side face 111 of the battery cell 110. In the circumferential direction of the battery cell 110, a gap 124 is defined between two ends of the heating film 120. A central angle α of part of the peripheral side face 111 corresponding to the gap 124 satisfies 1.5° ≤ *α* ≤ 15°. Specifically, the central angle α of part of the peripheral side face 111 corresponding to the gap 124 may be, but not limited to, 1.5°, 2°, 3.5°, 4°, 4.5°, 5.5°, 6°, 7°, 7.5°, 8°, 9°, 10°, 11°, 11.2°, 12°, 13°, 14°, 14.5°, 15°, etc.

The heating film 120 is rectangular and may be square.

In the embodiments, the heating film 120 in an unwound state is adhered to the peripheral side face 111 of the battery cell 110 in the circumferential direction of the battery cell 110, so that most regions of the battery cell 110 are covered. Thus, the battery cell 110 can be heated uniformly, and all the regions of the battery cell 110 have the same temperature, thereby avoiding overcharging or overdischarging of the battery cell 110 due to temperature differences across the regions of the battery cell 110, and improving the safety performance of the battery assembly 100. The heating film 120 is assembled to the battery cell 110 in a simple manner, which is convenient to operate, and is beneficial to improving the assembly and disassembly efficiency of the heating film 120. In addition, the central angle α of part of the peripheral side face 111 corresponding to the gap 124 satisfies 1.5° ≤ *α* ≤ 15°, so that the heating film 120 can cover most regions of the peripheral side face 111 of the battery cell 110, and a waste of the heating film 120 caused by the excessive winding of the heating film 120 on the battery cell 110 can be avoided. If the central angle α of part of the peripheral side face 111 corresponding to the gap 124 is greater than 15°, the gap 124 is relatively large, thus a relatively large part of the peripheral side face 111 of the battery cell 110 is not covered by the heating film 120, causing non-uniform heating of the battery cell 110 and posing a safety risk.

Referring to FIGS. 1 to 4, in some embodiments, the heating layer 122 further includes a first lead portion 1223 and a second lead portion 1224. The first lead portion 1223 is electrically connected to one end of the heating portion 1221. The second lead portion 1224 is electrically connected to another end of the heating portion 1221 away from the first lead portion 1223. The first lead portion 1223 is spaced apart from the second lead portion 1224.

It may be understood that, in the embodiments of the disclosure, one of two opposite ends of the heating portion 1221 is electrically connected to the first lead portion 1223, and the other of the two opposite ends of the heating portion 1221 is electrically connected to the second lead portion 1224

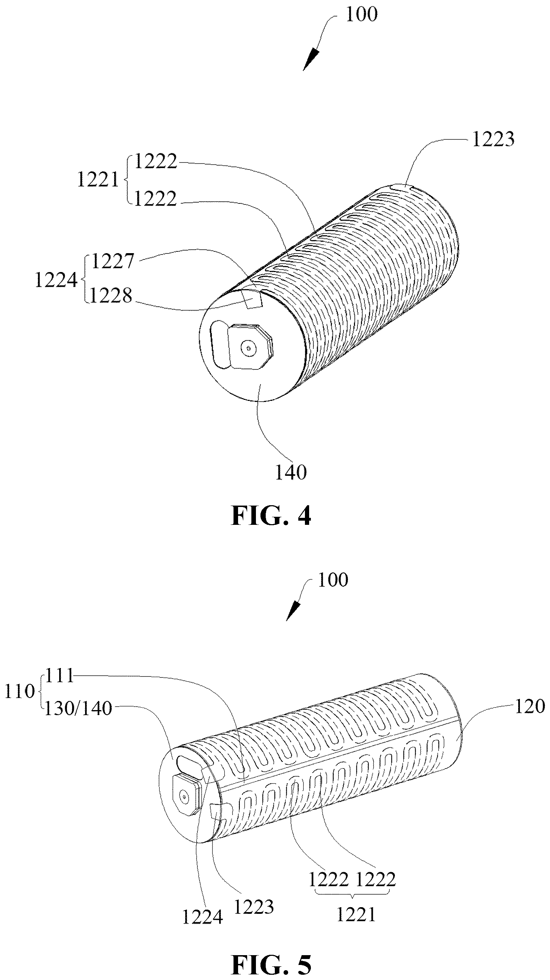

Alternatively, in the embodiment illustrated in FIG. 5 of the disclosure, the heating film 120 is attached to the peripheral side face 111, the first lead portion 1223 is spaced apart from the second lead portion 1224 in the circumferential direction of the peripheral side face 111. In the embodiment illustrated in FIG. 4 of the disclosure, the heating film 120 is attached to the peripheral side face 111, the first lead portion 1223 is spaced apart from the second lead portion 1224 in an axial direction of the peripheral side face 111.

In the embodiments of the disclosure, the first lead portion 1223 is electrically connected to one end of the heating portion 1221, the first lead portion 1223 is configured to be electrically connected to an external power supply to transfer a current to the heating portion 1221, so that the current can flow through the multiple heating sub-portions 1222, and the multiple heating sub-portions 1222 can generate heat energy to heat the battery cell 110. The second lead portion 1224 is electrically connected to another end of the heating portion 1221 away from the first lead portion 1223. The second lead portion 1224 is configured to be electrically connected to an external power supply to transfer a current to the heating portion 1221, so that the current can flow through the multiple heating sub-portions 1222, and the multiple heating sub-portions 1222 can generate heat energy to heat the battery cell 110. The first lead portion 1223 is spaced apart from the second lead portion 1224, so that when the first lead portion 1223 and the second lead portion 1224 are electrically connected to the external power supply(ies) without wire entanglement, thereby improving the safety performance of the battery assembly 100.

In some embodiments, the battery assembly 100 further has a first end face 130 and a second end face 140. The first end face 130 is located at one of two opposite ends of the battery cell 110 and is connected to the battery cell 110, and the second end face 140 is located at the other of the two opposite ends of the battery cell 110 and is connected to the battery cell 110. The first lead portion 1223 is arranged close to the first end face 130, and the second lead portion 1224 is arranged close to the second end face 140.

In the embodiments of the disclosure, the first lead portion 1223 is arranged close to the first end face 130 and the second lead portion 1224 is arranged close to the second end face 140, the first lead portion 1223 and the second lead portion 1224 are arranged close to different end faces of the battery cell 110. The first lead portion 1223 and the second lead portion 1224 are configured to be electrically connected to the external power supply(ies) to transfer a current to the heating portion 1221, so that the current can flow through the multiple heating sub-portions 1222, and the multiple heating sub-portions 1222 can generate heat energy to heat the battery cell 110. The first lead portion 1223 and the second lead portion 1224 are arranged close to different end faces of the battery cell 110, respectively, thus the first lead portion 1223 and the second lead portion 1224 are far away from each other. When the first lead portion 1223 and the second lead portion 1224 are electrically connected to an external power supply(ies), wire entanglement can be avoided, thereby improving power supply stability of the external power supply to the heating film 120 of the battery cell 110.

In some embodiments, the battery assembly 100 further has the first end face 130 and the second end face 140. The first end face 130 is located at one of the two opposite ends of the battery cell 110 and is connected to the battery cell 110, and the second end face 140 is located at the other of the two opposite ends of the battery cell 110 and is connected to the battery cell 110. The first lead portion 1223 includes a first lead sub-portion 1225 and a second lead sub-portion 1226 that is connected to the first lead sub-portion 1225 in a bending manner. One end of the first lead sub-portion 1225 away from the second lead sub-portion 1226 is electrically connected to the heating portion 1221, the first lead sub-portion 1225 is arranged on the peripheral side face 111, and the second lead sub-portion 1226 is connected to the first lead sub-portion 1225 in a bending manner, and is attached to the first end face 130.

In the embodiments of the disclosure, the first lead portion 1223 is disposed close to the first end face 130, the first lead sub-portion 1225 is connected to the second lead sub-portion 1226 in a bending manner. One end of the first lead sub-portion 1225 away from the second lead sub-portion 1226 is electrically connected to the heating portion 1221 and is disposed on the peripheral side face 111. The first lead sub-portion 1225 is configured to be electrically connected to an external power supply and transfer a current to the heating portion 1221, so that the current can flow through the multiple heating sub-portions 1222, and the multiple heating sub-portions 1222 can generate heat energy to heat the battery cell 110. The second lead sub-portion 1226 is disposed on the first end face 130 and configured to secure a position of the first lead sub-portion 1225. As the usage time increases, the battery cell 110 will expand due to heating to press against the multiple heating sub-portions 1222 and the first lead sub-portion 1225. When the battery cell 110 restores to its original shape, a gap will generate between the peripheral side face 111 and a combination of the multiple heating sub-portions 1222 and the first lead sub-portion 1225, resulting in that the first lead sub-portion 1225 is prone to detach from the peripheral side face 111. With the aid of the second lead sub-portion 1226, the position of the first lead sub-portion 1225 can be limited by the second lead sub-portion 1226, thereby preventing the first lead sub-portion 1225 from being scratched to detach from the peripheral side face 111. As a result, the first lead sub-portion 1225 can be firmly adhered to the peripheral side face 111 of the battery cell 110, the power supply stability of an external power supply to the heating film 120 of the battery cell 110 can be improved, and the attachment effect of the heating film 120 to the peripheral side face 111 of the battery cell 110 can be improved, thereby achieving efficient heating of the battery cell 110. The heating film 120 provided in the disclosure is not prone to detach from the cylindrical battery cell 110, thereby avoiding overheating of the heating film 120, and improving the safety performance of the battery assembly 100.

In some embodiments, the battery assembly 100 further has the first end face 130 and the second end face 140. The first end face 130 is located at one of the two opposite ends of the battery cell 110 and is connected to the battery cell 110, and the second end face 140 are located at the other of the two opposite ends of the battery cell 110 and is connected to the battery cell 110. The second lead portion 1224 includes a third lead sub-portion 1227 and a fourth lead sub-portion 1228 that is connected to the third lead sub-portion 1227 in a bending manner. One end of the third lead sub-portion 1227 away from the fourth lead sub-portion 1228 is electrically connected to the heating portion 1221, the third lead sub-portion 1227 is arranged on the peripheral side face 111, and the fourth lead sub-portion 1228 is connected to the third lead sub-portion 1227 in a bending manner, and is attached to the second end face 140.

In the embodiments of the disclosure, the second lead portion 1224 is disposed close to the second end face 140. The third lead sub-portion 1227 is connected to the fourth lead sub-portion 1228 in a bending manner. One end of the third lead sub-portion 1227 away from the fourth lead sub-portion 1228 is electrically connected to the heating portion 1221 and is disposed on the peripheral side face 111. When the third lead sub-portion 1227 is electrically connected to an external power supply, the third lead sub-portion 1227 is configured to transfer a current the heating portion 1221, so that the current can flow through the multiple heating sub-portions 1222, and the multiple heating sub-portions 1222 can generate heat energy to heat the battery cell 110. The fourth lead sub-portion 1228 is disposed on the second end face 140 and configured to secure a position of the third lead sub-portion 1227. As the usage time increases, the battery cell 110 will expand due to heating to press against the multiple heating sub-portions 1222 and the third lead sub-portion 1227. When the battery cell 110 restores to its original shape, a gap will generate between the peripheral side face 111 and a combination of the multiple heating sub-portions 1222 and the third lead sub-portion 1227, resulting in that the third lead sub-portion 1227 is prone to detach from the peripheral side face 111. With the aid of the fourth lead sub-portion 1228, the location of the third lead sub-portion 1227 can be limited by the fourth lead sub-portion 1228, thereby preventing the third lead sub-portion 1227 from being scratched to detach from the peripheral side face 111. As a result, the third lead sub-portion 1227 can be firmly adhered to the peripheral side face 111 of the battery cell 110, the power supply stability of an external power supply to the heating film 120 of the battery cell 110 can be improved, and the attachment effect of the heating film 120 to the peripheral side face 111 of the battery cell 110 can be improved, thereby achieving effective heating of the battery cell 110. The heating film 120 provided in the disclosure is not prone to detach from the cylindrical battery cell 110, thereby avoiding overheating of the heating film 120, and improving the safety performance of the battery assembly 100.

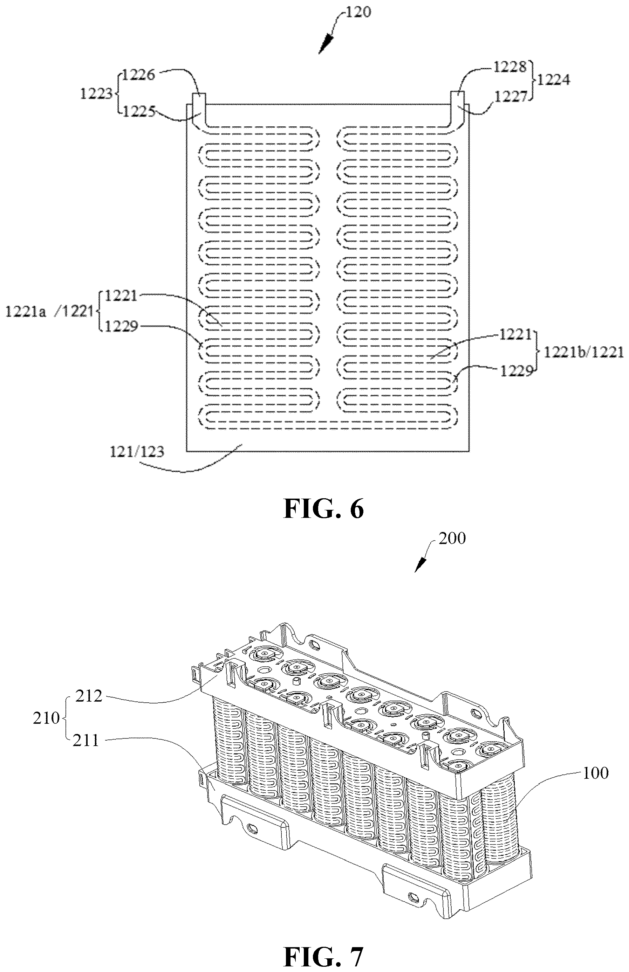

Alternatively, referring to FIGS. 5 and 6, in other embodiments, the first lead portion 1223 and the second lead portion 1224 are both arranged close to the first end face 130. In other embodiments, the first lead portion 1223 and the second lead portion 1224 are both arranged close to the second end face 140.

In the embodiments of the disclosure, the first lead portion 1223 and the second lead portion 1224 are both arranged close to one of the first end face 130 and the second end face 140. Thus, the first lead portion 1223 and the second lead portion 1224 are close to the same end face of the battery cell 110. The first lead portion 1223 and the second lead portion 1224 can be electrically connected to an external power supply(ies) to transfer a current to the heating portion 1221, so that the current can flow through the multiple heating sub-portions 1222, and the multiple heating sub-portions 1222 can generate heat energy to heat the battery cell 110. The first lead portion 1223 and the second lead portion 1224 are both arranged close to the same end face of the battery cell 110, thus the first lead portion 1223 is close to the second lead portion 1224. In a case where the first lead portion 1223 and the second lead portion 1224 are electrically connected to an external power supply(ies), it is advantageous to avoid complex wire entanglement and improve power supply stability of the external power supply to the heating film 120 of the battery cell 110.

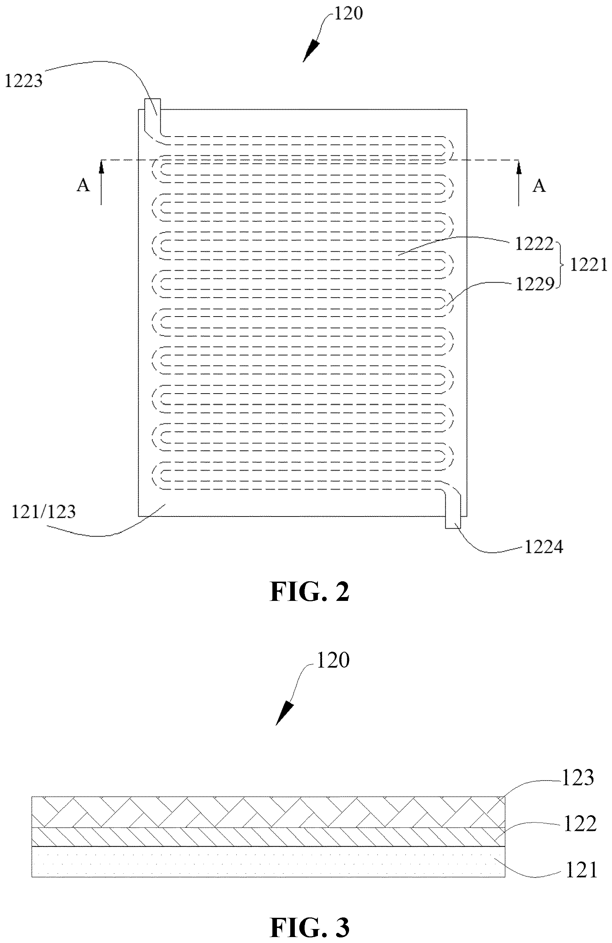

Alternatively, in an embodiment illustrated in FIG. 2 of the disclosure, the first lead portion 1223 and the second lead portion 1224 are disposed at opposite ends of the heating film 120 in the height direction of the battery cell 110, respectively. The heating portion 1221 further includes multiple bending sub-portions 1229. The heating sub-portions 1222 and the bending sub-portions 1229 are arranged alternately in sequence. The multiple heating sub-portions 1222 are arranged at intervals in the height direction of the battery cell 110, and each heating sub-portion 1222 extends along the peripheral side face 111 of the battery cell 110 and is closely attached to the peripheral side face 111. The extending direction of the heating sub-portion 1222 intersects the height direction of the battery cell 110. A plane where the heating sub-portion 1222 is located is coaxial with the peripheral side face 111.

In the embodiments, the first lead portion 1223 is disposed at one of the two opposite ends of the heating film 120, and the second lead portion 1224 is disposed at the other of the two opposite ends of the heating film 120. That is, the first lead portion 1223 is disposed close to the first end face 130, and the second lead portion 1224 is disposed close to the second end face 140. In the embodiments, the multiple bending sub-portions 1229 bend and are connected to the multiple heating sub-portions 1222, respectively, so that the heating sub-portions 1222 can receive a current to heat the battery cell 110. In addition, the heating sub-portion 1222 extends along the peripheral side face 111 of the battery cell 110 and is closely attached to the peripheral side face 111, which is beneficial to increasing a contact area between the heating sub-portion 1222 and the battery cell 110. Thus, heat dissipated by the heating sub-portion 1222 can be transferred to the battery cell 110 through the first insulating layer 121, the battery cell 110 can be uniformly heated, all the regions of the battery cell 110 can have the same temperature and thus the same charging and discharging capability, thereby improving the safety performance of the battery assembly 100.

In an embodiment illustrated in FIG. 6 of the disclosure, the first lead portion 1223 and the second lead portion 1224 are arranged on the same side of the heating film 120 in the height direction of the battery cell 110. The heating portion 1221 includes a first heating group 1221a and a second heating group 1221b. The first heating group 1221a is spaced apart from the second heating group 1221b in a direction perpendicular to the height direction of the battery cell 110. The first heating group 1221a includes multiple bending sub-portions 1229 and multiple heating sub-portions 1222, the multiple heating sub-portions 1222 and the multiple bending sub-portions 1229 are arranged alternately in sequence, the multiple heating sub-portions 1222 are arranged at intervals in the height direction of the battery cell 110, and each heating sub-portion 1222 extends along the peripheral side face 111 of the battery cell 110 and is closely attached to the peripheral side face 111. The second heating group 1221b includes multiple bending sub-portions 1229 and multiple heating sub-portions 1222. The multiple heating sub-portions 1222 and the multiple bending sub-portions 1229 are arranged alternately in sequence. The multiple heating sub-portions 1222 are arranged at intervals in the height direction of the battery cell 110, and each heating sub-portion 1222 extends along the peripheral side face 111 of the battery cell 110 and is closely attached to the peripheral side face 111. The heating sub-portion 1222 of the first heating group 1221a which is farthest from the first lead portion 1223 is connected to the heating sub-portion 1222 of the second heating group 1221b which is farthest from the first lead portion 1223. A plane where the heating portion 1221 is located is coaxial with the peripheral side face 111.

In the embodiments, the first lead portion 1223 and the second lead portion 1224 are arranged on the same side of the heating film 120. That is, both the first lead portion 1223 and the second lead portion 1224 are disposed close to the first end face 130, or both the first lead portion 1223 and the second lead portion 1224 are disposed close to the second end face 140. The first heating group 1221a is spaced apart from the second heating group 1221b in the direction perpendicular to the height direction of the battery cell 110. The heating sub-portion 1222 of the first heating group 1221a farther away from the first lead portion 1223 is connected to the heating sub-portion 1222 of the second heating group 1221b farther away from the first lead portion 1223, so that a connection between the first heating group 1221a and the second heating group 1221b can be achieved, which enables the heating sub-portion 1222 to receive a current and heat the battery cell 110. In addition, each heating sub-portion 1222 extends along the peripheral side face 111 of the battery cell 110 and is closely attached to the peripheral side face 111, which is beneficial to increasing the contact area between the heating sub-portion 1222 and the battery cell 110, so that heat dissipated by the heating sub-portion 1222 can be transferred to the battery cell 110 through the first insulating layer 121, the battery cell 110 can be uniformly heated, and all the regions of the battery cell 110 have the same temperature and thus the same charging and discharging capability, thereby improving the safety performance of the battery assembly 100.

In some embodiments, the first lead portion 1223 is exposed from the second insulating layer 123, and the second lead portion 1224 is exposed from the second insulating layer 123.

It may be understood that, two opposite surfaces of the first lead portion 1223 are both not covered by the second insulating layer 123. Two opposite surfaces of the second lead portion 1224 are both not covered by the second insulating layer 123.

In the embodiments of the disclosure, the first lead portion 1223 is exposed from the second insulating layer 123, so that the first lead portion 1223 can be electrically connected to an external power supply to transfer a current to the heating portion 1221, the current can flow through the multiple heating sub-portions 1222, and the multiple heating sub-portions 1222 can generate heat energy to heat the battery cell 110. The second lead portion 1224 is exposed from the second insulating layer 123, so that the second lead portion 1224 can be electrically connected to an external power supply to transfer a current to the heating portion 1221, the current can flow through the multiple heating sub-portions 1222, and the multiple heating sub-portions 1222 can generate heat energy to heat the battery cell 110.

It may be understood that, the first lead portion 1223 includes the first lead sub-portion 1225 and the second lead sub-portion 1226 that is connected to the first lead sub-portion 1225 in a bending manner. One end of the first lead sub-portion 1225 away from the second lead sub-portion 1226 is electrically connected to the heating portion 1221. The first lead sub-portion 1225 is disposed on the peripheral side face 111, and thus a surface of the first lead sub-portion 1225 facing the second insulating layer 123 is exposed from the second insulating layer 123. In the embodiments of the disclosure, the first lead sub-portion 1225 may be electrically connected to an external power supply to transfer a current to the heating portion 1221, thereby achieving the heating of the battery cell 110.

It may be understood that the second lead portion 1224 includes the third lead sub-portion 1227 and the fourth lead sub-portion 1228 connected to the third lead sub-portion 1227 in a bending manner. One end of the third lead sub-portion 1227 away from the fourth lead sub-portion 1228 is electrically connected to the heating portion 1221. The third lead sub-portion 1227 is disposed on the peripheral side face 111, and thus a surface of the third lead sub-portion 1227 facing the second insulating layer 123 is exposed from the second insulating layer 123. In the embodiments of the disclosure, the third lead sub-portion 1227 may be electrically connected to an external power supply to transfer a current to the heating portion 1221, thereby achieving the heating of the battery cell 110.

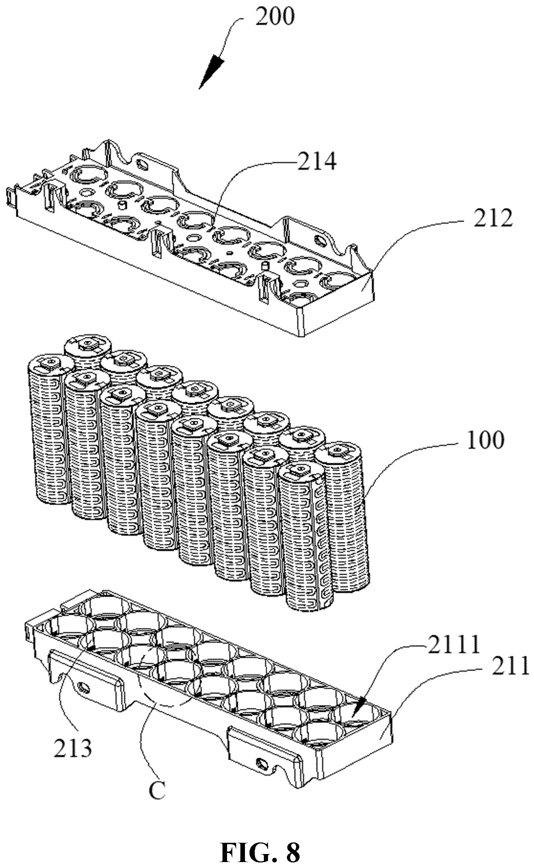

Referring to FIGS. 7 and 8, a battery module 200 is further provided in the disclosure. The battery module 200 includes multiple battery assemblies 100 provided in the disclosure. The multiple battery assemblies 100 are electrically connected to one another in at least one of series connection or parallel connection.

Optionally, the multiple battery assemblies 100 may be electrically connected to one another in one of series connection, parallel connection, and series-parallel connection.

In the embodiments of the disclosure, the battery module 200 includes multiple battery assemblies 100. The multiple battery assemblies 100 are electrically connected to one another in one of series connection, parallel connection, series-parallel connection, and the like. The heating film 120 in each battery assembly 100 has a large contact area with the battery cell 110. The heating film 120 has a high heating efficiency, the battery cell 110 can be heated uniformly, and all the regions of the battery cell 110 can have the same temperature. Thus, the battery assembly 100 can have high safety performance, so that the battery module 200 has high safety performance and high heating efficiency.

In some embodiments, the battery module 200 further includes a mounting assembly 210. The mounting assembly 210 includes a first mounting member 211 and a second mounting member 212 spaced apart from the first mounting member 211. The first mounting member 211 and the second mounting member 212 are both configured to fix the multiple battery assemblies 100. The multiple battery assemblies 100 are arranged in an array between the first mounting member 211 and the second mounting member 212.

In the embodiments of the disclosure, the first mounting member 211 faces the second mounting member 212. The battery assemblies 100 are arranged in an array between the first mounting member 211 and the second mounting member 212. In other words, the first mounting member 211 and the second mounting member 212 are disposed at two opposite ends of the multiple battery assemblies 100, respectively. The first mounting member 211 and the second mounting member 212 are configured to fix the multiple battery assemblies 100 and arrange the multiple battery assemblies 100 in an array, thereby improving the energy density of the battery module 200. In addition, each of the multiple battery assemblies 100 includes the heating film 120. By arranging the multiple battery assemblies 100 in an array between the first mounting member 211 and the second mounting member 212, the assembly of the battery module 200 can be simplified because each battery assembly 100 only needs to be support and placed between the first mounting member 211 and the second mounting member 212.

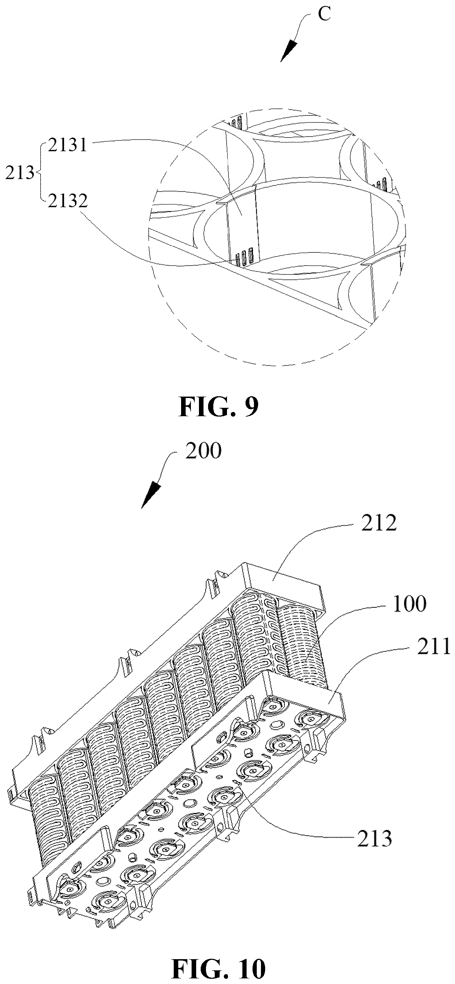

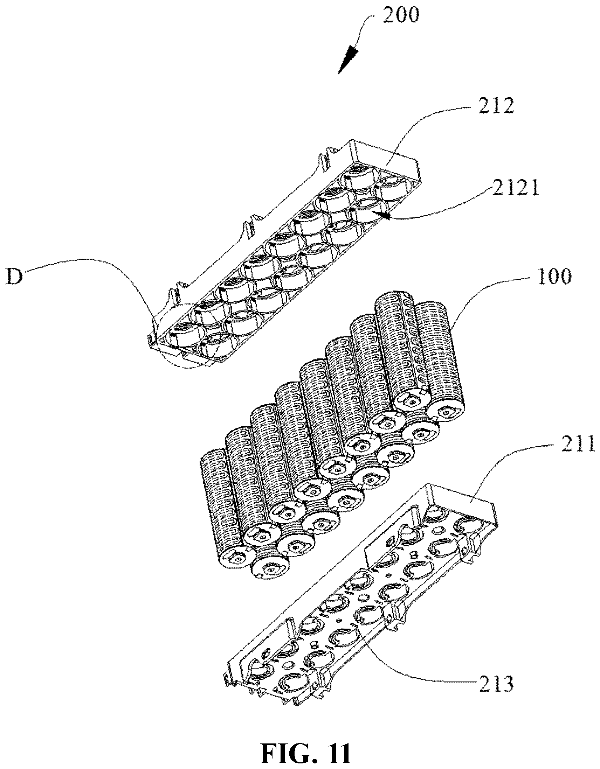

Referring to FIGS. 7, 8, 10, and 11, in some embodiments, the first mounting member 211 defines multiple first grooves 2111 arranged in an array. The second mounting member 212 defines multiple second grooves 2121 arranged in an array. The multiple first grooves 2111 and the multiple second grooves 2121 are arranged in one-to-one correspondence in the height direction of the battery cell 110. The multiple first grooves 2111 and the multiple second grooves 2121 are cooperatively configured to fix the battery assemblies 100.

It may be understood that, in the height direction of the battery cell 110, one of the first grooves 2111 is disposed to face one of the second grooves 2121 for fixing one of the battery assemblies 100.

In the embodiments of the disclosure, the multiple first grooves 2111 arranged in an array and the multiple second grooves 2121 arranged in an array are disposed in one-to-one correspondence, thereby securing one of two opposite ends of each of the multiple battery assemblies 100 to one of the first grooves 2111 and securing the other of the two opposite ends of each of the multiple battery assemblies 100 to one of the second groove 2121. The first grooves 2111 and the second grooves 2121 cooperate to define an accommodation space for the battery assemblies 100, so that one of the two opposite ends of each of the battery assemblies 100 can be accommodated in one of the first grooves 2111, and the other of the two opposite ends of each of the battery assemblies 100 can be accommodated in one of the second grooves 2121, and the first grooves 2111 and the second grooves 2121 are in one-to-one correspondence, thereby improving stability and regularity of arrangement of the battery assemblies 100 in the battery module 200, and facilitating improvement of the energy density of the battery module 200. The first grooves 2111 and the second grooves 2121 cooperate to limit the two opposite ends of the battery assemblies 100. The battery assemblies 100 are assembled with the mounting assembly 210, part of a surface of the heating film 120 away from the battery cell 110 abuts against an inner wall of the first groove 2111, another part of the surface of the heating film 120 away from the battery cell 110s abuts against an inner wall of the second groove 2121. With the aid of the first groove 2111 and the second groove 2121, the heating film 120 can be prevented from detaching from the peripheral side face 111 of the battery cell 110, thereby avoiding overheating of the heating film 120 and improving the safety performance of the battery assembly 100.

In some embodiments, the mounting assembly 210 further includes multiple first electrical connectors 213 and multiple second electrical connectors 214. Each of the multiple first electrical connectors 213 is disposed in one of the multiple first grooves 2111 and is configured to be electrically connected to the heating film 120. Each of the multiple second electrical connectors 214 is disposed in one of the second grooves 2121 and is configured to be electrically connected to one end of the heating film 120 away from the first electrical connector 213.

In the embodiments of the disclosure, the battery assembly 100 is secured to the first groove 2111 and the second groove 2121, the first electrical connector 213 in the first groove 2111 is electrically connected to the heating film 120 of the battery assembly 100, and the second electrical connector 214 in the second groove 2121 is electrically connected to the heating film 120 of the battery assembly 100, so that a current can be transferred to the heating film 120, thereby achieving heating of the heating film 120 and eventually achieving heating of the battery cell 110.

It may be understood that, each of the first electrical connectors 213 is disposed in one of the first grooves 2111 and is electrically connected to the first lead sub-portion 1225 to transfer a current to the heating portion 1221. Each of the second electrical connectors 214 is disposed in one of the second grooves 2121 and is electrically connected to the third lead sub-portion 1227 to transfer a current to the heating portion 1221.

In the embodiments of the disclosure, the battery assembly 100 is secured to the first groove 2111 and the second groove 2121, the first electrical connector 213 in the first groove 2111 is electrically connected to the first lead sub-portion 1225 to transfer a current to the first lead sub-portion 1225, so that the current can flow through the heating portion 1221. Heat dissipated by the heating portion 1221 can be transferred to the battery cell 110 through the first insulating layer 121, thereby eventually achieving heating of the battery cell 110. The second electrical connector 214 in the second groove 2121 is electrically connected to the third lead sub-portion 1227 to transfer a current to the third lead sub-portion 1227, so that the current can flow through the heating portion 1221. Heat dissipated by the heating portion 1221 can be transferred to the battery cell 110 through the first insulating layer 121, thereby eventually achieving heating of the battery cell 110.

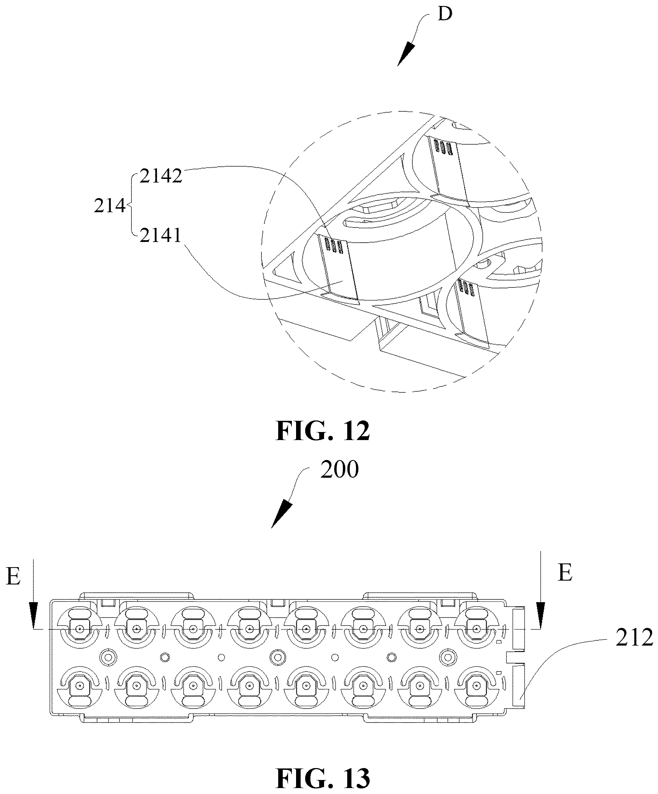

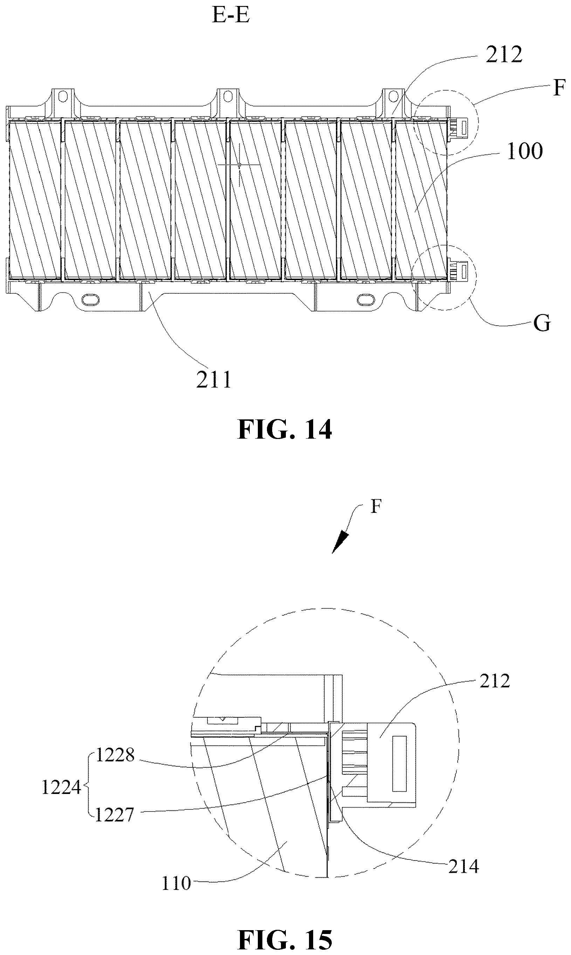

Referring to FIGS. 7 to 16, in some embodiments, the first electrical connector 213 includes a first electrical connection portion 2131 and a first abutting portion 2132. The first electrical connection portion 2131 is disposed on a side wall of the first groove 2111. The first abutting portion 2132 protrudes from a side wall of the first electrical connection portion 2131 towards a center axis of the first groove 2111.

It may be understood that, the first abutting portion 2132 protrudes from the side wall of the first electrical connection portion 2131 towards the center axis of the first groove 2111. That is, the first abutting portion 2132 is disposed on the first electrical connection portion 2131 and faces the interior of the first groove 2111.

In the embodiments of the disclosure, the first abutting portion 2132 protrudes from the side wall of the first electrical connection portion 2131towards the center axis of the first groove 2111. The battery assembly 100 is secured to the first groove 2111, the first abutting portion 2132 in the first groove 2111 is electrically connected to the first lead sub-portion 1225 of the battery assembly 100 to transfer a current to the first lead sub-portion 1225, so that the current can flow through the heating portion 1221. Heat dissipated by the heating portion 1221 can be transferred to the battery cell 110 through the first insulating layer 121, thereby eventually achieving heating of the battery cell 110. Compared with a case where the first electrical connection portion 2131 is electrically connected to the first lead sub-portion 1225 directly, the first abutting portion 2132 protrudes from the first electrical connection portion 2131, which enables the first electrical connector 213 to better abut against the battery assembly 100 and enables the first abutting portion 2132 to be better electrically connected to the first lead sub-portion 1225, so that the heating film 120 can better heat the battery cell 110. In addition, when the battery cell 110 expands, the first abutting portion 2132 can abut against the first lead sub-portion 1225 more tightly, which is beneficial to improving stability of electrical connection between the first electrical connector 213 and the battery assembly 100, thereby enabling the heating film 120 to better heat the battery cell 110.

Alternatively, in some embodiments, the first abutting portion 2132 protrudes from the side wall of the first electrical connection portion 2131 towards the center axis of the first groove 2111. The first abutting portion 2132 is provided with a smooth structure on a side of the first abutting portion 2132 away from a bottom of the first groove 2111. The smooth structure is beneficial to guiding the battery assembly 100 to be secured to the first groove 2111. When one end of the battery assembly 100 moves towards the first groove 2111, the smooth structure can have a certain guiding function to guide the battery assembly 100 to be secured to the first groove 2111.

Optionally, the first abutting portion 2132 can be implemented as multiple first abutting portions 2132. The multiple first abutting portions 2132 are spaced apart from one another and protrude from the side wall of the first electrical connection portion 2131 towards the center axis of the first groove 2111.

In the embodiments of the disclosure, the multiple first abutting portions 2132 are spaced apart from one another and protrude from the side wall of the first electrical connection portion 2131 towards the center axis of the first groove 2111. Thus, when the battery assembly 100 is secured to the first groove 2111, the multiple first abutting portions 2132 can better abut against the first lead sub-portion 1225 of the battery assembly 100, thereby improving the electrical connection stability between the multiple first abutting portions 2132 and the first lead sub-portion 1225, and facilitating more effective heating of the battery cell 110 by the heating film 120.

Alternatively, in some embodiments, the multiple first abutting portions 2132 are integrally formed by stamping. Integrally stamping forming of the multiple first abutting portions 2132 simplifies the manufacturing process of the multiple first abutting portions 2132 and helps to save the manufacturing costs.

Alternatively, in other embodiments, the multiple first abutting portions 2132 are formed by welding and connecting. Welding and connecting forming of the multiple first abutting portions 2132 helps to save raw materials and improves structural strength of the multiple first abutting portions 2132.

In some embodiments, the second electrical connector 214 includes a second electrical connection portion 2141 and a second abutting portion 2142. The second electrical connection portion 2141 is disposed on a side wall of the second groove 2121. The second abutting portion 2142 protrudes from a side wall of the second electrical connection portion 2141 towards a center axis of the second groove 2121.

It may be understood that, the second abutting portion 2142 protrudes from the side wall of the second electrical connection portion 2141 towards the center axis of the second groove 2121, that is, the second abutting portion 2142 is disposed on the second electrical connection portion 2141 and faces the interior of the second groove 2121.

In the embodiments of the disclosure, the second abutting portion 2142 protrudes from the side wall of the second electrical connection portion 2141 towards the center axis of the second groove 2121. The battery assembly 100 is secured to the second groove 2121, the second abutting portion 2142 in the second groove 2121 is electrically connected to the third lead sub-portion 1227 of the battery assembly 100 to transfer a current to the third lead sub-portion 1227, so that the current can flow through the heating portion 1221. Heat dissipated by the heating portion 1221 can be transferred to the battery cell 110 through the first insulating layer 121, thereby eventually achieving heating of the battery cell 110. Compared with a case where the second electrical connection portion 2141 is electrically connected to the third lead sub-portion 1227 directly, the second abutting portion 2142 protrudes from the second electrical connection portion 2141, which enables the second electrical connector 214 to better abut against the battery assembly 100 and enables the second abutting portion 2142 to be better electrically connected to the third lead sub-portion 1227, so that the heating film 120 can better heat the battery cell 110. In addition, when the battery cell 110 expands, the second abutting portion 2142 can abut against the third lead sub-portion 1227 more tightly, which is beneficial to improving stability of electrical connection between the second electrical connector 214 and the battery assembly 100, thereby enabling the heating film 120 to better heat the battery cell 110.

Optionally, in some embodiments, the second abutting portion 2142 protrudes from the side wall of the second electrical connection portion 2141 towards the center axis of the second groove 2121. The second abutting portion 2142 is provided with a smooth structure on a side of the second abutting portion 2142 away from a bottom of the second groove 2121. The smooth structure is beneficial to guiding the battery assembly 100 to be secured to the second groove 2121. When one end of the battery assembly 100 moves towards the second groove 2121, the smooth structure can have a certain guiding function to guide the battery assembly 100 to be secured to the second groove 2121.

Optionally, the second abutting portion 2142 can be implemented as multiple second abutting portions 2142. The multiple second abutting portions 2142 are spaced apart from one another and protrude from the side wall of the second electrical connection portion 2141 towards the center axis of the second groove 2121.

In the embodiments of the disclosure, the multiple second abutting portions 2142 are spaced apart from one another and protrude from the side wall of the second electrical connection portion 2141 towards the center axis of the second groove 2121. Thus, when the battery assembly 100 is secured to the second groove 2121, the multiple second abutting portions 2142 can better abut against the third lead sub-portion 1227 of the battery assembly 100, thereby improving the electrical connection stability between the multiple second abutting portions 2142 and the multiple third lead sub-portion 1227, and facilitating more effective heating of the battery cell 110 by the heating film 120.

Alternatively, in some embodiments, the multiple second abutting portions 2142 are integrally formed by stamping. Integrally stamping forming of the multiple second abutting portions 2142 simplifies the manufacturing process of the multiple second abutting portions 2142 and helps to save the manufacturing costs.

Alternatively, in other embodiments, the multiple second abutting portions 2142 are formed by welding and connecting. Welding and connecting forming of the multiple second abutting portions 2142 helps to save raw materials and improves structural strength of the multiple second abutting portions 2142.

In some embodiments, the multiple first electrical connectors 213 and the multiple second electrical connectors 214 cooperate to connect the heating films 120 of the multiple battery assemblies 100 in one of series connection, parallel connection, or series-parallel connection.

In the embodiments of the disclosure, the multiple first electric connectors 213 and the multiple second electric connectors 214 are connected in one of series connection, parallel connection, or series-parallel connection, thereby achieving connection between the multiple heating films 120 of the battery assemblies 100 in one of series connection, parallel connection, or series-parallel connection. The multiple first electrical connectors 213 and the multiple second electrical connectors 214 can be electrically connected to an external power supply(ies) to power the heating film 120 through the multiple first electrical connectors 213 and the multiple second electrical connectors 214, so that a current(s) can be applied to the heating films 120 of the battery assemblies 100, and the current(s) can flow through the heating portions 1221 of the heating films 120 to dissipate and transfer heat to the battery cell 110, thereby eventually achieving heating of the battery cell 110.

Alternatively, in some embodiments, in a case where each of the multiple battery assemblies 100 is disposed between the first mounting member 211 and the second mounting member 212, the first abutting portion 2132 is electrically connected to the first lead sub-portion 1225 of the heating film 120. The second abutting portion 2142 is electrically connected to the third lead sub-portion 1227 of the heating film 120.

In the embodiments, in a case where the battery assembly 100 is disposed between the first mounting member 211 and the second mounting member 212, the first abutting portion 2132 protrudes from the side wall of the first electrical connection portion 2131 towards the center axis of the first groove 2111. When the battery assembly 100 is secured to the first groove 2111, the first abutting portion 2132 in the first groove 2111 is electrically connected to the first lead sub-portion 1225 of the battery assembly 100 to transfer a current to the first lead sub-portion 1225, so that a current can flow through the heating portion 1221. Heat dissipated by the heating portion 1221 can be transferred to the battery cell 110 through the first insulating layer 121, thereby eventually achieving the heating of the battery cell 110. In the embodiments of the disclosure, the second abutting portion 2142 protrudes from the side wall of the second electrical connection portion 2141 towards the center axis of the second groove 2121. When the battery assembly 100 is secured to the second groove 2121, the second abutting portion 2142 in the second groove 2121 is electrically connected to the third lead sub-portion 1227 of the battery assembly 100 to transfer a current to the third lead sub-portion 1227, so that the current can flow through the heating portion 1221. Heat dissipated by the heating portion 1221 can be transferred to the battery cell 110 through the first insulating layer 121, thereby eventually achieving the heating of the battery cell 110.

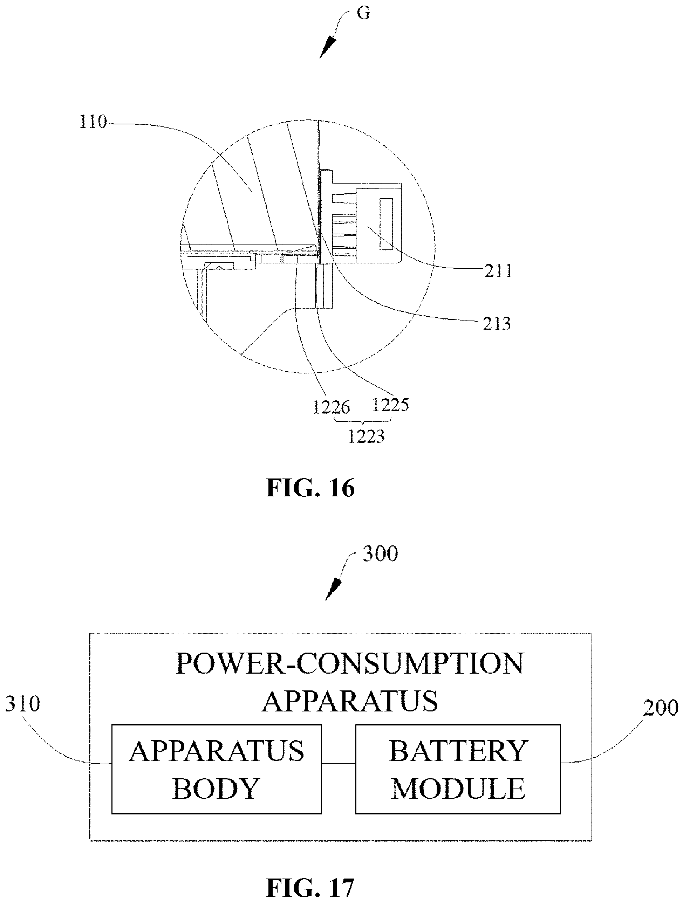

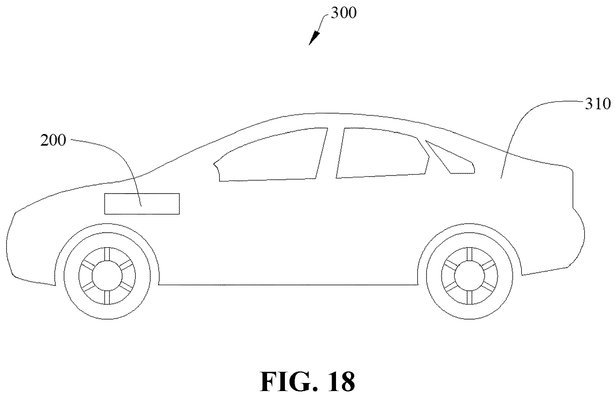

Optionally, referring to FIGS. 17 and 18, an electricity-consumption apparatus 300 is further provided in the disclosure. The electricity-consumption apparatus 300 includes an apparatus body 310 and the battery module 200 provided in the embodiments of the disclosure. The battery module 200 is configured to power the apparatus body 310.

In the embodiments of the disclosure, the battery module 200 has high safety performance and high heating efficiency, so that the battery module 200 can provide a stable power supply for the apparatus body 310, and the electricity-consumption apparatus 300 can operate normally.

Optionally, the electricity-consumption apparatus 300 in the embodiments of the disclosure may be, but is not limited to, a portable electronic device such as a mobile phone, a tablet computer, a notebook computer, a desktop computer, a smart toy, a smart bracelet, a smartwatch, an electronic reader, a game machine, or a toy. Alternatively, the electricity-consumption apparatus 300 may also be a large device such as an electric bicycle, an electric vehicle, a ship, a spacecraft, or the like.

## Claims

1. A battery assembly (100), comprising:
a battery cell (110) configured to provide energy and has a peripheral side face (111); and
a heating film (120) attached to the peripheral side face (111) of the battery cell (110) for heating the battery cell (110), wherein the heating film (120) comprises a first insulating layer (121), a heating layer (122), and a second insulating layer (123) that are sequentially stacked, the first insulating layer (121) is closer to the peripheral side face (111) of the battery cell (110) than the second insulating layer (123), and the heating layer (122) is configured to receive a current to generate heat energy to heat the battery cell (110);
wherein the heating film (120) is formed by bending a rectangular heating film (120) and attaching the rectangular heating film (120) to the peripheral side face (111) of the battery cell (110),
**characterised in that**, in the circumferential direction of the battery cell (110), a gap is defined between two ends of the heating film (120), and a central angle α of part of the peripheral side face (111) corresponding to the gap satisfies 1.5° < *α* < 15°.

2. The battery assembly (100) of claim 1, wherein the heating layer (122) comprises a heating portion (1221), the heating portion (1221) comprises a plurality of heating sub-portions (1222), each of the plurality of heating sub-portions (1222) extends in a circumferential direction of the battery cell (110), and the plurality of heating sub-portions (1222) are arranged at intervals in a height direction of the battery cell (110) and sequentially connected end to end.

3. The battery assembly (100) of claim 2, wherein the heating layer (122) further comprises a first lead portion (1223) and a second lead portion (1224), the first lead portion (1223) is electrically connected to one end of the heating portion (1221), the second lead portion (1224) is electrically connected to another end of the heating portion (1221) away from the first lead portion (1223), and the first lead portion (1223) is spaced apart from the second lead portion (1224).

4. The battery assembly (100) of claim 3, further comprising a first end face (130) and a second end face (140), wherein the first end face (130) is located at one of two opposite ends of the battery cell (110) and is connected to the battery cell (110), and the second end face (140) is located at the other of the two opposite ends of the battery cell (110) and is connected to the battery cell (110); and the first lead portion (1223) comprises a first lead sub-portion (1225) and a second lead sub-portion (1226) that is connected to the first lead sub-portion (1225) in a bending manner, one end of the first lead sub-portion (1225) away from the second lead sub-portion (1226) is electrically connected to the heating portion (1221), the first lead sub-portion (1225) is arranged on the peripheral side face (111), and the second lead sub-portion (1226) is connected to the first lead sub-portion (1225) in a bending manner, and is attached to the first end face (130); and
the second lead portion (1224) comprises a third lead sub-portion (1227) and a fourth lead sub-portion (1228) that is connected to the third lead sub-portion (1227) in a bending manner, one end of the third lead sub-portion (1227) away from the fourth lead sub-portion (1228) is electrically connected to the heating portion (1221), the third lead sub-portion (1227) is arranged on the peripheral side face (111), and the fourth lead sub-portion (1228) is connected to the third lead sub-portion (1227) in a bending manner, and is attached to the second end face (140).

5. The battery assembly (100) of claim 3, wherein the first lead portion (1223) is exposed from the second insulating layer (123), and the second lead portion (1224) is exposed from the second insulating layer (123).

6. A battery module (200), comprising a plurality of battery assemblies (100) of any one of claims 1 to 5, wherein the plurality of battery assemblies (100) are electrically connected to one another in at least one of series connection or parallel connection.

7. The battery module (200) of claim 6, further comprising a mounting assembly (210), wherein the mounting assembly (210) comprises a first mounting member (211) and a second mounting member (212) spaced apart from the first mounting member (211), the plurality of battery assemblies (100) are arranged in an array between the first mounting member (211) and the second mounting member (212), and the first mounting member (211) and the second mounting member (212) are both configured to fix the plurality of battery assemblies (100).

8. The battery module (200) of claim 7, wherein the first mounting member (211) defines a plurality of first grooves (2111) arranged in an array, the second mounting member (212) defines a plurality of second grooves (2121) arranged in an array, the plurality of first grooves (2111) and the plurality of second grooves (2121) are arranged in one-to-one correspondence in a height direction of the battery cell (110), and the plurality of first grooves (2111) and the plurality of second grooves (2121) are cooperatively configured to fix the plurality of battery assemblies (100).

9. The battery module (200) of claim 8, wherein the mounting assembly (210) further comprises a plurality of first electrical connectors (213) and a plurality of second electrical connectors (214), each of the plurality of first electrical connectors (213) is disposed in one of the plurality of first grooves (2111) and is configured to be electrically connected to the heating film (120), and each of the plurality of second electrical connectors (214) is disposed in one of the plurality of second grooves (2121) and is configured to be electrically connected to one end of the heating film (120) away from the plurality of first electrical connectors (213).

10. The battery module (200) of claim 9, wherein each of the plurality of first electrical connectors (213) comprises a first electrical connection portion (2131) and a first abutting portion (2132), the first electrical connection portion (2131) is disposed on a side wall of the first groove (2111), and the first abutting portion (2132) protrudes from a side wall of the first electrical connection portion (2131) towards a center axis of the first groove (2111); and each of the plurality of second electrical connectors (214) comprises a second electrical connection portion (2141) and a second abutting portion (2142), the second electrical connection portion (2141) is disposed on a side wall of the second groove (2121), and the second abutting portion (2142) protrudes from a side wall of the second electrical connection portion (2141) towards a center axis of the second groove (2121).

11. The battery module (200) of claim 10, wherein
each of the plurality of battery assemblies (100) further comprises a first end face (130) and a second end face (140), the first end face (130) is located at one of two opposite ends of the battery cell (110) and is connected to the battery cell (110), and the second end face (140) is located at the other of the two opposite ends of the battery cell (110) and is connected to the battery cell (110); the heating layer (122) comprises a heating portion (1221), a first lead portion (1223), and a second lead portion (1224), the first lead portion (1223) comprises a first lead sub-portion (1225) and a second lead sub-portion (1226) that is connected to the first lead sub-portion (1225) in a bending manner, one end of the first lead sub-portion (1225) away from the second lead sub-portion (1226) is electrically connected to the heating portion (1221), the first lead sub-portion (1225) is arranged on the peripheral side face (111), and the second lead sub-portion (1226) is arranged on the first end face (130); the second lead portion (1224) comprises a third lead sub-portion (1227) and a fourth lead sub-portion (1228) that is connected to the third lead sub-portion (1227) in a bending manner, one end of the third lead sub-portion (1227) away from the fourth lead sub-portion (1228) is electrically connected to the heating portion (1221), the third lead sub-portion (1227) is arranged on the peripheral side face (111), and the fourth lead sub-portion (1228) is arranged on the second end face (140); and
each of the plurality of battery assemblies (100) is disposed between the first mounting member (211) and the second mounting member (212), the first abutting portion (2132) is electrically connected to the first lead sub-portion (1225) of the heating film (120), and the second abutting portion (2142) is electrically connected to the third lead sub-portion (1227) of the heating film (120).

12. An electricity-consumption apparatus (300), comprising:
an apparatus body (310); and
the battery module (200) of any one of claims 6 to 11, wherein the battery module (200) is configured to power the apparatus body (310).

## Patentansprüche

1. Batteriebaugruppe (100), umfassend:
eine Batteriezelle (110), die so konfiguriert ist, dass sie Energie bereitstellt und eine periphere Seitenfläche (111) aufweist; und
eine Heizfolie (120), die an der peripheren Seitenfläche (111) der Batteriezelle (110) zum Erwärmen der Batteriezelle (110) befestigt ist, wobei die Heizfolie (120) eine erste Isolierschicht (121), eine Heizschicht (122) und eine zweite Isolierschicht (123) umfasst, die nacheinander gestapelt sind, wobei die erste Isolierschicht (121) näher an der peripheren Seitenfläche (111) der Batteriezelle (110) liegt als die zweite Isolierschicht (123), und die Heizschicht (122) so konfiguriert ist, dass sie einen Strom empfängt, um Wärmeenergie zum Erwärmen der Batteriezelle (110) zu erzeugen;
wobei die Heizfolie (120) durch Biegen einer rechteckigen Heizfolie (120) und Befestigen der rechteckigen Heizfolie (120) an der peripheren Seitenfläche (111) der Batteriezelle (110) ausgebildet ist, **dadurch gekennzeichnet, dass** in der Umfangsrichtung der Batteriezelle (110) ein Spalt zwischen zwei Enden der Heizfolie (120) definiert ist, und ein zentraler Winkel *α* eines dem Spalt entsprechenden Teils der peripheren Seitenfläche (111) 1,5° < *α* < 15° entspricht.

2. Batteriebaugruppe (100) nach Anspruch 1, wobei die Heizschicht (122) einen Heizabschnitt (1221) umfasst, der Heizabschnitt (1221) eine Vielzahl von Heizunterabschnitten (1222) umfasst, sich jeder der Vielzahl von Heizunterabschnitten (1222) in einer Umfangsrichtung der Batteriezelle (110) erstreckt, und die Vielzahl von Heizunterabschnitten (1222) in Abständen in einer Höhenrichtung der Batteriezelle (110) angeordnet und nacheinander durchgehend verbunden sind.

3. Batteriebaugruppe (100) nach Anspruch 2, wobei die Heizschicht (122) ferner einen ersten Anschlussabschnitt (1223) und einen zweiten Anschlussabschnitt (1224) umfasst, der erste Anschlussabschnitt (1223) elektrisch mit einem Ende des Heizabschnitts (1221) verbunden ist, der zweite Anschlussabschnitt (1224) elektrisch mit einem anderen Ende des Heizabschnitts (1221), abseits des ersten Anschlussabschnitts (1223), verbunden ist, und der erste Anschlussabschnitt (1223) von dem zweiten Anschlussabschnitt (1224) beabstandet ist.

4. Batteriebaugruppe (100) nach Anspruch 3, ferner umfassend eine erste Endfläche (130) und eine zweite Endfläche (140), wobei sich die erste Endfläche (130) an einem von zwei gegenüberliegenden Enden der Batteriezelle (110) befindet und mit der Batteriezelle (110) verbunden ist, und die zweite Endfläche (140) sich an dem anderen der beiden gegenüberliegenden Enden der Batteriezelle (110) befindet und mit der Batteriezelle (110) verbunden ist; und der erste Anschlussabschnitt (1223) einen ersten Anschlussunterabschnitt (1225) und einen zweiten Anschlussunterabschnitt (1226) umfasst, der mit dem ersten Anschlussunterabschnitt (1225) auf gebogene Weise verbunden ist, ein Ende des ersten Anschlussunterabschnitts (1225), abseits des zweiten Anschlussunterabschnitts (1226), elektrisch mit dem Heizabschnitt (1221) verbunden ist, der erste Anschlussunterabschnitt (1225) auf der peripheren Seitenfläche (111) angeordnet ist, und der zweite Anschlussunterabschnitt (1226) mit dem ersten Anschlussunterabschnitt (1225) auf gebogene Weise verbunden und an der ersten Endfläche (130) befestigt ist; und
der zweite Anschlussabschnitt (1224) einen dritten Anschlussunterabschnitt (1227) und einen vierten Anschlussunterabschnitt (1228) umfasst, der mit dem dritten Anschlussunterabschnitt (1227) auf gebogene Weise verbunden ist, ein Ende des dritten Anschlussunterabschnitts (1227), abseits des vierten Anschlussunterabschnitts (1228), elektrisch mit dem Heizabschnitt (1221) verbunden ist, der dritte Anschlussunterabschnitt (1227) auf der peripheren Seitenfläche (111) angeordnet ist, und der vierte Anschlussunterabschnitt (1228) mit dem dritten Anschlussunterabschnitt (1227) auf gebogene Weise verbunden und an der zweiten Endfläche (140) befestigt ist.

5. Batteriebaugruppe (100) nach Anspruch 3, wobei der erste Anschlussabschnitt (1223) aus der zweiten Isolierschicht (123) freiliegt und der zweite Anschlussabschnitt (1224) aus der zweiten Isolierschicht (123) freiliegt.

6. Batteriemodul (200), umfassend eine Vielzahl von Batteriebaugruppen (100) nach einem der Ansprüche 1 bis 5, wobei die Vielzahl von Batteriebaugruppen (100) in mindestens einer Reihenschaltung oder Parallelschaltung elektrisch miteinander verbunden sind.

7. Batteriemodul (200) nach Anspruch 6, ferner umfassend eine Befestigungsbaugruppe (210), wobei die Befestigungsbaugruppe (210) ein erstes Befestigungselement (211) und ein zweites Befestigungselement (212) umfasst, das von dem ersten Befestigungselement (211) beabstandet ist, wobei die Vielzahl von Batteriebaugruppen (100) in einer Anordnung zwischen dem ersten Befestigungselement (211) und dem zweiten Befestigungselement (212) angeordnet sind, und das erste Befestigungselement (211) und das zweite Befestigungselement (212) beide so konfiguriert sind, dass sie die Vielzahl von Batteriebaugruppen (100) fixieren.

8. Batteriemodul (200) nach Anspruch 7, wobei das erste Befestigungselement (211) eine Vielzahl von in einer Anordnung angeordneten ersten Nuten (2111) definiert, das zweite Befestigungselement (212) eine Vielzahl von in einer Anordnung angeordneten zweiten Nuten (2121) definiert, die Vielzahl von ersten Nuten (2111) und die Vielzahl von zweiten Nuten (2121) in einer Höhenrichtung der Batteriezelle (110) in einer Eins-zu-Eins-Beziehung angeordnet sind, und die Vielzahl von ersten Nuten (2111) und die Vielzahl von zweiten Nuten (2121) zusammenwirkend so konfiguriert sind, dass sie die Vielzahl von Batteriebaugruppen (100) fixieren.

9. Batteriemodul (200) nach Anspruch 8, wobei die Befestigungsbaugruppe (210) ferner eine Vielzahl von ersten elektrischen Steckverbindern (213) und eine Vielzahl von zweiten elektrischen Steckverbindern (214) umfasst, wobei jeder der Vielzahl von ersten elektrischen Steckverbindern (213) in einer der Vielzahl von ersten Nuten (2111) angeordnet und so konfiguriert ist, dass er elektrisch mit der Heizfolie (120) verbunden werden kann, und jeder der Vielzahl von zweiten elektrischen Steckverbindern (214) in einer der Vielzahl von zweiten Nuten (2121) angeordnet und so konfiguriert ist, dass er elektrisch mit einem Ende der Heizfolie (120), abseits der Vielzahl von ersten elektrischen Steckverbindern (213), verbunden werden kann.

10. Batteriemodul (200) nach Anspruch 9, wobei jeder der Vielzahl von ersten elektrischen Steckverbindern (213) einen ersten elektrischen Verbindungsabschnitt (2131) und einen ersten Anschlagabschnitt (2132) umfasst, wobei der erste elektrische Verbindungsabschnitt (2131) an einer Seitenwand der ersten Nut (2111) angeordnet ist und der erste Anschlagabschnitt (2132) von einer Seitenwand des ersten elektrischen Verbindungsabschnitts (2131) in Richtung einer Mittelachse der ersten Nut (2111) vorsteht; und jeder der Vielzahl von zweiten elektrischen Steckverbindern (214) einen zweiten elektrischen Verbindungsabschnitt (2141) und einen zweiten Anschlagabschnitt (2142) umfasst, wobei der zweite elektrische Verbindungsabschnitt (2141) an einer Seitenwand der zweiten Nut (2121) angeordnet ist und der zweite Anschlagabschnitt (2142) von einer Seitenwand des zweiten elektrischen Verbindungsabschnitts (2141) in Richtung einer Mittelachse der zweiten Nut (2121) vorsteht.

11. Batteriemodul (200) nach Anspruch 10, wobei
jede der Vielzahl von Batteriebaugruppen (100) ferner eine erste Endfläche (130) und eine zweite Endfläche (140) umfasst, die erste Endfläche (130) sich an einem von zwei gegenüberliegenden Enden der Batteriezelle (110) befindet und mit der Batteriezelle (110) verbunden ist, und die zweite Endfläche (140) sich an dem anderen der beiden gegenüberliegenden Enden der Batteriezelle (110) befindet und mit der Batteriezelle (110) verbunden ist; die Heizschicht (122) einen Heizabschnitt (1221), einen ersten Anschlussabschnitt (1223) und einen zweiten Anschlussabschnitt (1224) umfasst, der erste Anschlussabschnitt (1223) einen ersten Anschlussunterabschnitt (1225) und einen zweiten Anschlussunterabschnitt (1226) umfasst, der mit dem ersten Anschlussunterabschnitt (1225) auf gebogene Weise verbunden ist, ein Ende des ersten Anschlussunterabschnitts (1225), abseits des zweiten Anschlussunterabschnitts (1226), elektrisch mit dem Heizabschnitt (1221) verbunden ist, der erste Anschlussunterabschnitt (1225) an der peripheren Seitenfläche (111) angeordnet ist, und der zweite Anschlussunterabschnitt (1226) an der ersten Endfläche (130) angeordnet ist; der zweite Anschlussabschnitt (1224) einen dritten Anschlussunterabschnitt (1227) und einen vierten Anschlussunterabschnitt (1228) umfasst, der mit dem dritten Anschlussunterabschnitt (1227) auf gebogene Weise verbunden ist, ein Ende des dritten Anschlussunterabschnitts (1227), abseits des vierten Anschlussunterabschnitts (1228), elektrisch mit dem Heizabschnitt (1221) verbunden ist, der dritte Anschlussunterabschnitt (1227) auf der peripheren Seitenfläche (111) angeordnet ist, und der vierte Anschlussunterabschnitt (1228) auf der zweiten Endfläche (140) angeordnet ist; und
jede der Vielzahl von Batteriebaugruppen (100) zwischen dem ersten Befestigungselement (211) und dem zweiten Befestigungselement (212) angeordnet ist, der erste Anschlagabschnitt (2132) elektrisch mit dem ersten Anschlussunterabschnitt (1225) der Heizfolie (120) verbunden ist, und der zweite Anschlagabschnitt (2142) elektrisch mit dem dritten Anschlussunterabschnitt (1227) der Heizfolie (120) verbunden ist.

12. Stromverbrauchsgerät (300), umfassend:
einen Gerätekörper (310); und
das Batteriemodul (200) nach einem der Ansprüche 6 bis 11, wobei das Batteriemodul (200) so konfiguriert ist, dass es den Gerätekörper (310) mit Strom versorgt.

## Revendications

1. Ensemble batterie (100), comportant :
un élément de batterie (110) configuré pour fournir de l'énergie et présentant une face latérale périphérique (111) ; et
un film chauffant (120) fixé à la face latérale périphérique (111) de l'élément de batterie (110) pour chauffer l'élément de batterie (110), dans lequel le film chauffant (120) comporte une première couche isolante (121), une couche chauffante (122) et une deuxième couche isolante (123) qui sont empilées séquentiellement, la première couche isolante (121) est plus proche de la face latérale périphérique (111) de l'élément de batterie (110) que la deuxième couche isolante (123), et la couche chauffante (122) est configurée pour recevoir un courant afin de générer de l'énergie thermique pour chauffer l'élément de batterie (110) ;
dans lequel le film chauffant (120) est formé par pliage d'un film chauffant rectangulaire (120) et fixation du film chauffant rectangulaire (120) à la face latérale périphérique (111) de l'élément de batterie (110), **caractérisé en ce que**, dans la direction circonférentielle de l'élément de batterie (110), un espace est défini entre deux extrémités du film chauffant (120), et un angle central *α* d'une partie de la face latérale périphérique (111) correspondant à l'espace satisfait à 1,5° < *α* < 15°.

2. Ensemble batterie (100) selon la revendication 1, dans lequel la couche chauffante (122) comporte une partie chauffante (1221), la partie chauffante (1221) comporte une pluralité de sous-parties chauffantes (1222), chacune de la pluralité de sous-parties chauffantes (1222) s'étend dans une direction circonférentielle de l'élément de batterie (110), et la pluralité de sous-parties chauffantes (1222) sont agencées à intervalles dans une direction de hauteur de l'élément de batterie (110) et connectées séquentiellement de bout en bout.

3. Ensemble batterie (100) selon la revendication 2, dans lequel la couche chauffante (122) comporte en outre une première partie de fil (1223) et une deuxième partie de fil (1224), la première partie de fil (1223) est connectée électriquement à une extrémité de la partie chauffante (1221), la deuxième partie de fil (1224) est connectée électriquement à une autre extrémité de la partie chauffante (1221) éloignée de la première partie de fil (1223), et la première partie de fil (1223) est espacée de la deuxième partie de fil (1224).

4. Ensemble batterie (100) selon la revendication 3, comportant en outre une première face d'extrémité (130) et une deuxième face d'extrémité (140), dans lequel la première face d'extrémité (130) est située à l'une des deux extrémités opposées de l'élément de batterie (110) et est connectée à l'élément de batterie (110), et la deuxième face d'extrémité (140) est située à l'autre des deux extrémités opposées de l'élément de batterie (110) et est connectée à l'élément de batterie (110) ; et la première partie de fil (1223) comporte une première sous-partie de fil (1225) et une deuxième sous-partie de fil (1226) qui est connectée à la première sous-partie de fil (1225) par pliage, une extrémité de la première sous-partie de fil (1225) éloignée de la deuxième sous-partie de fil (1226) est connectée électriquement à la partie chauffante (1221), la première sous-partie de fil (1225) est agencée sur la face latérale périphérique (111), et la deuxième sous-partie de fil (1226) est connectée à la première sous-partie de fil (1225) par pliage, et est fixée à la première face d'extrémité (130) ; et
la deuxième partie de fil (1224) comporte une troisième sous-partie de fil (1227) et une quatrième sous-partie de fil (1228) qui est connectée à la troisième sous-partie de fil (1227) par pliage, une extrémité de la troisième sous-partie de fil (1227) éloignée de la quatrième sous-partie de fil (1228) est connectée électriquement à la partie chauffante (1221), la troisième sous-partie de fil (1227) est agencée sur la face latérale périphérique (111), et la quatrième sous-partie de fil (1228) est connectée à la troisième sous-partie de fil (1227) par pliage, et est fixée à la deuxième face d'extrémité (140).

5. Ensemble batterie (100) selon la revendication 3, dans lequel la première partie de fil (1223) est exposée à partir de la deuxième couche isolante (123), et la deuxième partie de fil (1224) est exposée à partir de la deuxième couche isolante (123).

6. Module de batteries (200), comportant une pluralité d'ensembles batteries (100) selon l'une quelconque des revendications 1 à 5, dans lequel la pluralité d'ensembles batteries (100) sont connectés électriquement les uns aux autres dans au moins une connexion en série ou parallèle.

7. Module de batteries (200) selon la revendication 6, comportant en outre un ensemble de montage (210), dans lequel l'ensemble de montage (210) comporte un premier organe de montage (211) et un deuxième organe de montage (212) espacé du premier organe de montage (211), la pluralité d'ensembles batteries (100) sont agencés dans un réseau entre le premier organe de montage (211) et le deuxième organe de montage (212), et le premier organe de montage (211) et le deuxième organe de montage (212) sont tous deux configurés pour fixer la pluralité d'ensembles batteries (100).

8. Module de batteries (200) selon la revendication 7, dans lequel le premier organe de montage (211) définit une pluralité de premières rainures (2111) agencées dans un réseau, le deuxième organe de montage (212) définit une pluralité de deuxièmes rainures (2121) agencées dans un réseau, la pluralité de premières rainures (2111) et la pluralité de deuxièmes rainures (2121) sont agencées en correspondance univoque dans une direction de hauteur de l'élément de batterie (110), et la pluralité de premières rainures (2111) et la pluralité de deuxièmes rainures (2121) sont configurés de manière coopérative pour fixer la pluralité d'ensembles batteries (100).

9. Module de batteries (200) selon la revendication 8, dans lequel l'ensemble de montage (210) comporte en outre une pluralité de premiers connecteurs électriques (213) et une pluralité de deuxièmes connecteurs électriques (214), chacun de la pluralité de premiers connecteurs électriques (213) est disposé dans l'une de la pluralité de premières rainures (2111) et est configuré pour être connecté électriquement au film chauffant (120), et chacun de la pluralité de deuxièmes connecteurs électriques (214) est disposé dans l'une de la pluralité de deuxièmes rainures (2121) et est configuré pour être connecté électriquement à une extrémité du film chauffant (120) éloignée de la pluralité de premiers connecteurs électriques (213).

10. Module de batteries (200) selon la revendication 9, dans lequel chacun de la pluralité de premiers connecteurs électriques (213) comporte une première partie de connexion électrique (2131) et une première partie de butée (2132), la première partie de connexion électrique (2131) est disposée sur une paroi latérale de la première rainure (2111), et la première partie de butée (2132) fait saillie depuis une paroi latérale de la première partie de connexion électrique (2131) vers un axe central de la première rainure (2111) ; et chacun de la pluralité de deuxièmes connecteurs électriques (214) comporte une deuxième partie de connexion électrique (2141) et une deuxième partie de butée (2142), la deuxième partie de connexion électrique (2141) est disposée sur une paroi latérale de la deuxième rainure (2121), et la deuxième partie de butée (2142) fait saillie depuis une paroi latérale de la deuxième partie de connexion électrique (2141) vers un axe central de la deuxième rainure (2121).

11. Module de batteries (200) selon la revendication 10, dans lequel
chacun de la pluralité d'ensembles batteries (100) comporte en outre une première face d'extrémité (130) et une deuxième face d'extrémité (140), la première face d'extrémité (130) est située à l'une des deux extrémités opposées de l'élément de batterie (110) et est connectée à l'élément de batterie (110), et la deuxième face d'extrémité (140) est située à l'autre des deux extrémités opposées de l'élément de batterie (110) et est connectée à l'élément de batterie (110) ; la couche chauffante (122) comporte une partie chauffante (1221), une première partie de fil (1223) et une deuxième partie de fil (1224), la première partie de fil (1223) comporte une première sous-partie de fil (1225) et une deuxième sous-partie de fil (1226) qui est connectée à la première sous-partie de fil (1225) par pliage, une extrémité de la première sous-partie de fil (1225) éloignée de la deuxième sous-partie de fil (1226) est connectée électriquement à la partie chauffante (1221), la première sous-partie de fil (1225) est agencée sur la face latérale périphérique (111), et la deuxième sous-partie de fil (1226) est agencée sur la première face d'extrémité (130) ; la deuxième partie de fil (1224) comporte une troisième sous-partie de fil (1227) et une quatrième sous-partie de fil (1228) qui est connectée à la troisième sous-partie de fil (1227) par pliage, une extrémité de la troisième sous-partie de fil (1227) éloignée de la quatrième sous-partie de fil (1228) est connectée électriquement à la partie chauffante (1221), la troisième sous-partie de fil (1227) est agencée sur la face latérale périphérique (111), et la quatrième sous-partie de fil (1228) est agencée sur la deuxième face d'extrémité (140) ; et
chacun de la pluralité d'ensembles batteries (100) est disposé entre le premier organe de montage (211) et le deuxième organe de montage (212), la première partie de butée (2132) est connectée électriquement à la première sous-partie de fil (1225) du film chauffant (120), et la deuxième partie de butée (2142) est connectée électriquement à la troisième sous-partie de fil (1227) du film chauffant (120).

12. Appareil de consommation d'électricité (300), comportant :
un corps d'appareil (310) ; et
le module de batteries (200) selon l'une quelconque des revendications 6 à 11, dans lequel le module de batteries (200) est configuré pour alimenter le corps d'appareil (310).
